# EUROPEAN PATENT SPECIFICATION

(11) **EP 2 286 945 B1**
(45) Date of publication and mention of the grant of the patent: **29.08.2018**
(21) Application number: 09746583.5
(22) Date of filing: 12.05.2009
(51) Int. Cl.: B23B 51/02

(54) **TWIST DRILL BIT**
SPIRALBOHRER
FORET HÉLICOÏDAL

(30) Priority: 15.05.2008 JP 2008128417
(43) Date of publication of application: 23.02.2011
(73) Proprietor: Sumitomo Electric Hardmetal Corp., Itami-shi, Hyogo 664-0016 (JP)
(72) Inventor: NAKAMURA Naohiro, Itami-shi Hyogo 664-0016 (JP); ABE Makoto, Itami-shi Hyogo 664-0016 (JP)
(74) Representative: Boult Wade Tennant LLP
(86) International application number: PCT/JP2009/058829
(87) International publication number: WO 2009/139377

(56) References cited:
- JP-A- 8 071 824
- JP-A- 2001 328 016
- JP-A- 2005 153 023
- US-A- 6 126 367

## Description

### Technical Field

The present invention relates to a double-angle twist drill according to the preamble of claim 1, including a cutting edge having a primary cutting edge that is disposed adjacent to the rotation center and a secondary cutting edge (peripheral cutting edge) that is connected to an outer end of the primary cutting edge, the primary and secondary cutting edges having different point angles.

Such a double-angle twist drill is known from US 6 126 367 A.

### Background Art

When drilling a fiber-reinforced composite material such as a carbon fiber reinforced plastic (CFRP), a drill having a smaller point angle causes a smaller degree of fuzzing of reinforcing fibers of a workpiece. However, a drill having a small point angle often causes so-called chatter, because such a drill has a long cutting edge. In particular, a long time is required for drilling a through-hole, because it is necessary to deeply insert the drill.

A double-angle twist drill has a primary cutting edge and a secondary cutting edge that have different point angles so as to limit the length of the cutting edge. Moreover, by making the point angle of the secondary cutting edge smaller than that of the first cutting edge, a drilling quality that is as good as that of a drill having a small point angle is realized. Such a double-angle twist drill is used for drilling a fiber-reinforced composite material and the like. Examples of such a double-angle twist drill (hereinafter simply referred to as a drill) are described in Patent Documents 1, 2, and 3.

Fig. 8 illustrates a drill described in Patent Document 1. A primary cutting edge 4a of the drill is a ridge at the intersection of a flute face of a helical flute 6 and a first flank face 7 at the tip. A secondary cutting edge 4b of the drill is a ridge at the intersection of the flute face of the helical flute 6 and a second flank face 8. The secondary cutting edge 4b has a skew angle γ with respect to a rotation axis O, which is approximately the same as the helix angle of the helical flute 6 in a side view of the drill.

Fig. 9 illustrates a drill described in Patent Document 2. A flat rake face 10₋₁, which is parallel to the axis of the drill, is provided to a helical flute 6 of the drill. A secondary cutting edge 4b is a ridge at the intersection of the rake face 10₋₁ and a second flank face 8 at the tip. The secondary cutting edge 4b has a skew angle of 0° with respect to the rotation axis. A drill described in Patent Document 3 has a structure similar to that of Patent Document 2, and the secondary cutting edge has a small skew angle with respect to the rotation axis O.

### Citation List

### Patent Document

Patent Document 1: JP9-277109A
Patent Document 2: JP63-306812A
Patent Document 3: JP6-075612U

### Summary of the Invention

### Problem to be solved by the invention

In the drill described in Patent Document 1, the secondary cutting edge has a skew angle γ with respect to the rotation axis in a side view of the drill, and the secondary cutting edge is considerably inclined in the direction of twist of the helical flute. Therefore, the secondary cutting edge is long and generates a force that lifts a workpiece during drilling. As a result, when drilling a flat panel-shaped workpiece that cannot be tightly fixed, so-called chatter occurs during drilling, and a chatter mark may be generated on the inner surface of a drilled hole or a burr may be generated when drilling a fiber-reinforced composite material.

In the drills described in Patent Documents 2 and 3, the flat rake face 10₋₁, which serves to decrease the skew angle of the secondary cutting edge with respect to the rotation axis, is provided and the flute face of the helical flute 6 is cut. Therefore, the rake angle of the secondary cutting edge 4b is smaller than that of a drill whose rake face of the secondary cutting edge is included in the flute face of the helical flute. As a result, the cutting ability of the secondary cutting edge is low, so that a burr may be generated at the mouth of a drilled hole when drilling a fiber-reinforced composite material and fuzzing of reinforcing fibers may occur, which leads to a decrease in the drilling quality. Moreover, additional time and work is required for forming the flat rake face 10₋₁.

US-6,126,367 relates to a drill bit to drill a round and precisely sized hole when using a hand-held drill motor. The bit has a multi-angle lip relief.

JP-H08-71824 concerns a composite material machining drill. A back taper part is formed at a tip part of a cutting edge part over an axial length of the drill. The diameter of a part following a back taper in the cutting edge part is formed to be constant, so that the cutting resistance of the composite material machining drill is ideally reduced.

An object of the present invention is to provide a double-angle twist drill that has good drilling quality without increasing the amount of manufacturing work or the like.

### Means for Solving the Problem

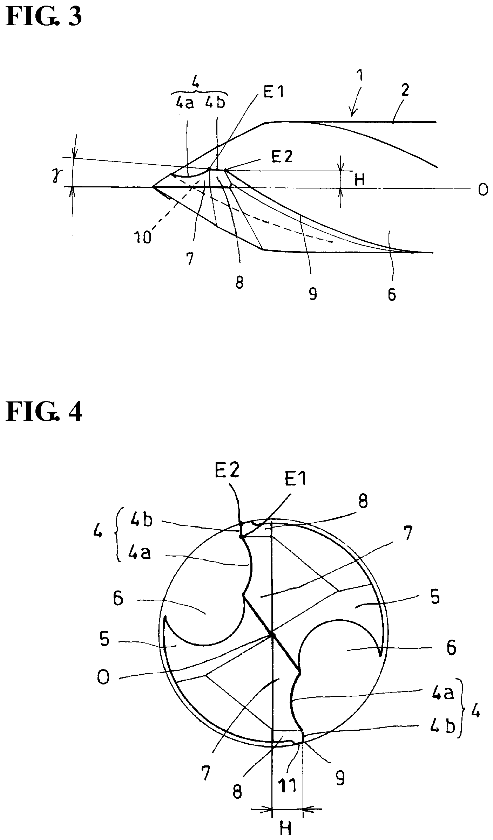

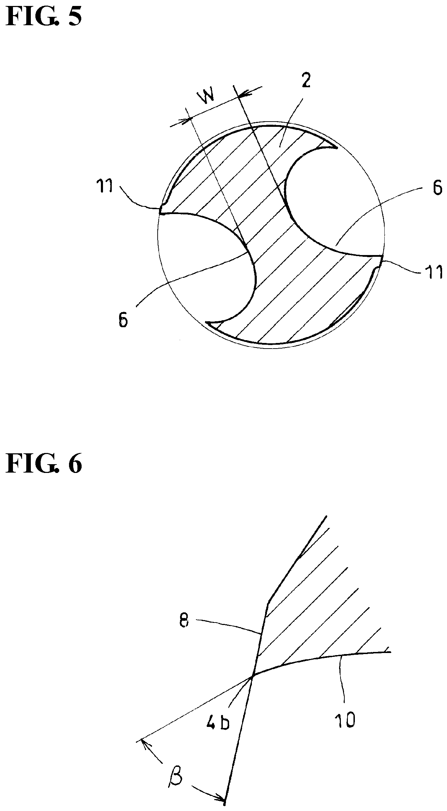

According to the present invention, the problem is solved by the double-angle twist drill as defined in claim 1. The secondary cutting edge is substantially parallel to the rotation axis of the drill and at least the rake face of the secondary cutting edge is included in the flute face of the helical flute. The expression "substantially parallel to" means that the skew angle of the secondary cutting edge with respect to the rotation axis in a side view of the drill is within the range of about ±5°. The expression "included in the flute face of the helical flute" means that, instead of independently providing the rake face 10₋₁ as in Patent Document 2, the rake face is formed as a curved surface that is the same as the helical flute that forms the primary cutting edge. The expression "in a side view of the drill" refers to a state illustrated in Fig. 3, in which the distance between the outer end E2 of the secondary cutting edge (a point located at the outermost periphery) of the drill and the rotation axis O (core height H) is half the core thickness (see W in Fig. 5). By making a part of the flute face located along the leading edge of the helical flute so as to be convexly curved with respect to the normal direction of rotation of the drill, the secondary cutting edge having a skew angle in the range of about -5° to +5° with respect to the rotation axis in a side view of the drill can be formed as a ridge at the intersection of the flute face and the second flank face.

In this drill, it is preferable that the helix angle of the helical flute be in the range of 10° to 40° and the rake face of the secondary cutting edge be included in the flute face of the helical flute. It is preferable that the point angle α2 of the secondary cutting edge be smaller than the point angle α1 of the primary cutting edge and the point angle α2 be in the range of 90° to 20°.

It is preferable that the diameter d of the outer end portion of the primary cutting edge be equal to or larger than 70% of the drill diameter D. It is preferable that the flute face of the helical flute intersect the margin face at the periphery of the body with an acute angle.

### Effect of the Invention

In the drill according to the present invention, the secondary cutting edge has a skew angle in the range of ±5° with respect to the rotation axis. Therefore, the secondary cutting edge is short, and a force generated during drilling so as to lift the workpiece is small. As a result, even when the workpiece is a thin plate that cannot be tightly fixed, high quality drilling can be performed without causing chatter.

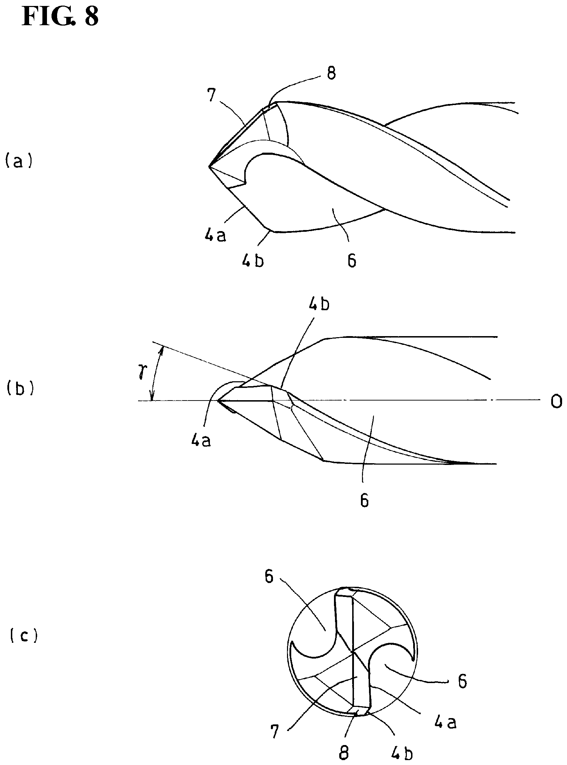

In the drill, the rake face of the secondary cutting edge is included in the flute face of the helical flute, so that the rake angle of the secondary cutting edge is not small. Depending on the shape of the helical flute, the rake angle of the secondary cutting edge is larger than that of the existing drill illustrated in Fig. 8, whereby a good cutting ability is realized. Thus, fuzzing when drilling a fiber-reinforced composite material is suppressed, and cutting force is decreased.

Moreover, the amount of work and time for manufacturing the drill do not increase because it is not necessary to form a flat rake face.

### Brief Description of Drawings

[Fig. 1] Fig. 1 is a side view of a drill according to an embodiment of the present invention.
[Fig. 2] Fig. 2 is an enlarged view of the tip of the drill of Fig. 1.
[Fig. 3] Fig. 3 is an enlarged side view of the drill of Fig. 1 illustrating the skew angle of a secondary cutting edge with respect to the rotation axis.
[Fig. 4] Fig. 4 is an enlarged front view of the drill of Fig. 1.
[Fig. 5] Fig. 5 is an enlarged sectional view taken along line X-X of Fig. 2.
[Fig. 6] Fig. 6 is a sectional view illustrating the wedge angle of the secondary cutting edge.
[Fig. 7] Fig. 7(a) illustrates how, in a known double-angle twist drill, an inner end of the secondary cutting edge is displaced due to forming of a flat rake face, and Fig. 7(b) illustrates the relationship between the secondary cutting edge and a flute face of a helical flute of the drill according to the present invention.
[Fig. 8] Fig. 8(a) is a side view of a main part of a known double-angle twist drill, Fig. 8(b) is a side view of the drill illustrating the skew angle of the secondary cutting edge of the drill with respect to the rotation axis, and Fig. 8(c) is a front view of the drill.
[Fig. 9] Fig. 9(a) is a side view of a main part of a known double-angle twist drill having a flat rake face, Fig. 9(b) is a side view illustrating the skew angle between the secondary cutting edge of the drill and the rotation axis, and Fig. 9(c) is a front view of the drill. Description of Embodiments

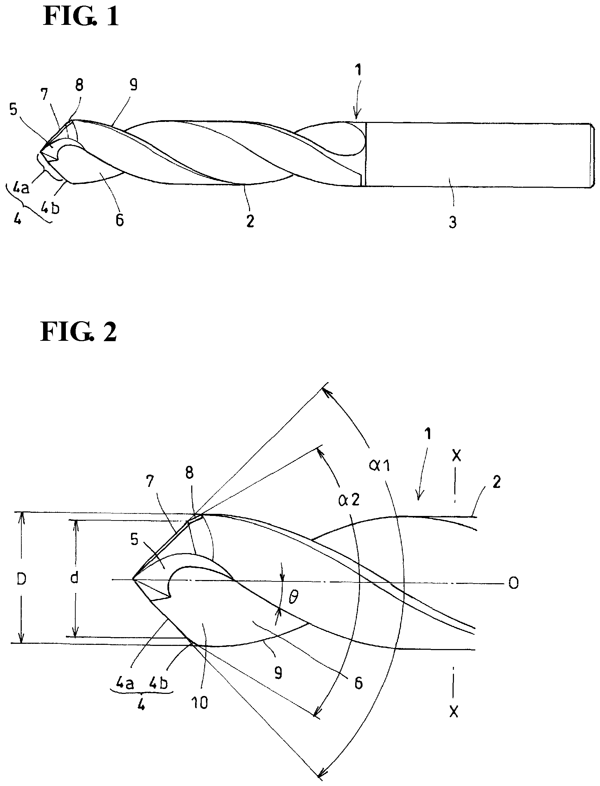

Hereinafter, a drill according to an embodiment of the present invention will be described with reference to Figs. 1 to 6. Figs. 1 to 4 illustrate a drill (double-angle twist drill) 1, which is a twist drill having two cutting edges, according to the present invention. The drill 1 illustrated in the figures is a solid drill including a body 2 and a shank 3 that is integrally formed with a rear end portion of the body 2. However, the present invention is also applicable to other drills, such as a solid tip drill, a coated drill having a cutting edge coated with a hard coating, and a drill having a cutting edge made of a hard compact. The number of the cutting edges is not limited to two, and may be three or four.

At the tip of the body 2, cutting edges 4 that are point-symmetric to each other with respect to the rotation center (rotation axis O) and a web thinning 5 adjunct to the cutting edges are formed. A helical flute 6, which is double-threaded, is formed at the periphery of the body 2.

The cutting edges 4 include a primary cutting edge 4a that extends partway from the rotation center (rotation axis O) outward in the radial direction and a secondary cutting edge 4b that extends from an outer end of the primary cutting edge 4a to the periphery of the body 2. The point angle α2 of the secondary cutting edge 4b is smaller than the point angle α1 of the primary cutting edge 4a. The smaller the point angle α2 of the secondary cutting edge 4b, the better the drilling quality. However, the smaller the point angle α2, the more easily the tip wears and the longer the cutting edge. Therefore, it is preferable that the upper limit of the point angle α2 be about 90° in order to secure a drilling quality and the lower limit of the point angle α2 be about 20° in order to protect the tip.

The skew angle γ (see Fig. 3) of the secondary cutting edge 4b with respect to the rotation axis O in a side view of the drill is in the range of -5° to +5°. Moreover, at least a rake face 10 of the secondary cutting edge 4b is included in the flute face of the helical flute 6. In Figs. 2 to 4, a first flank face 7 and a second flank face 8 are drawn. The primary cutting edge 4a is a ridge at the intersection of the first flank face 7 and the flute face of the helical flute 6. The secondary cutting edge 4b is a ridge at the intersection of the second flank face 8 and the flute face of the helical flute 6.

As illustrated in Fig. 5, a part of the flute face of the helical flute 6 that extends along a leading edge 9 is convexly curved with respect to the normal direction of rotation of the drill and intersects a margin face 11 at the periphery of the body 2. Thus, the skew angle γ of the secondary cutting edge 4b with respect to the rotation axis O can be made to be in the range or -5° to +5° without providing a flat rake face to the flute face of the helical flute 6. The difference between this drill and existing drills in this respect will be further described.

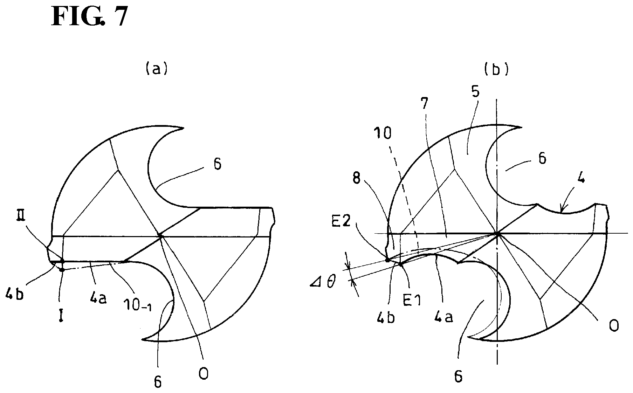

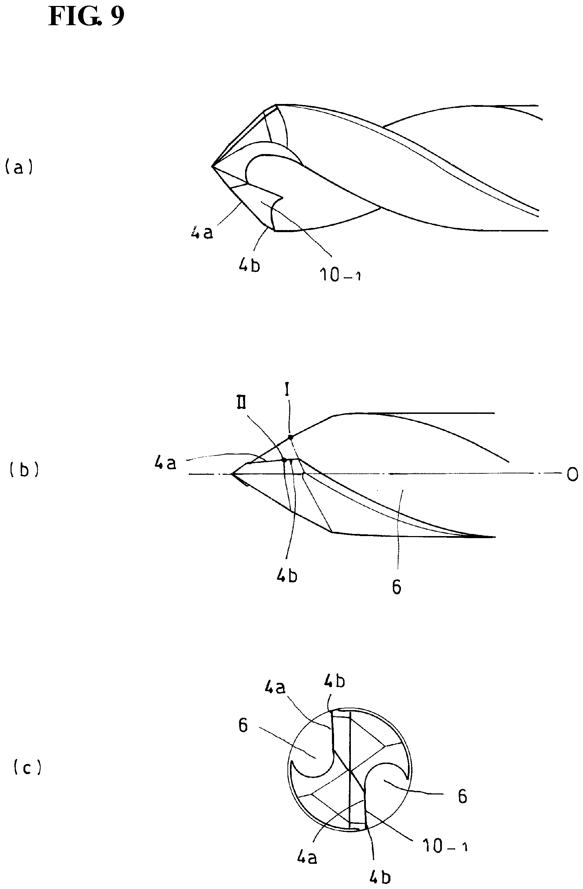

Fig. 7(a) illustrates how an inner end of the secondary cutting edge 4b in the radial direction (point of contact with the primary cutting edge) of the known drill illustrated in Fig. 9 is displaced when a flat rake face 10₋₁ is provided. When the flat rake face 10₋₁ is provided to the flute face of the helical flute 6, the inner end of the secondary cutting edge 4b is moved from a position I in Figs. 7(a) and 9(b) (position before the flat rake face is provided) to a position II. Thus, the skew angle γ between the secondary cutting edge 4b with respect to the rotation axis O can be made to be 0°. However, when the flat rake face 10₋₁ is provided, the rake angle of the secondary cutting edge 4b necessarily decreases, whereby the cutting ability of the cutting edge deteriorates. In the drill illustrated in Fig. 9, the rake angle of a part of the primary cutting edge 4a in which the flat rake face 10₋₁ is provided decreases, whereby the cutting ability deteriorates.

In contrast, a flat rake face is not provided in the drill according to the present invention. Instead, as illustrated in Fig. 7(b), the skew angle γ of the secondary cutting edge 4b with respect to the rotation axis is, for example, 5°, and the entirety of the secondary cutting edge 4b intersects the flute face of the helical flute 6 so that the rake face 10 of the secondary cutting edge 4b is included in the flute face of the helical flute 6 {in Fig. 7(b), Δθ denotes the twist amount (rotation angle) of the helical flute 6 from an inner end E1 to an outer end E2 of the secondary cutting edge 4b}. Therefore, decrease in the rake angle of the secondary cutting edge 4b due to the presence of the flat rake face does not occur. Fig. 6 illustrates the wedge angle β of the secondary cutting edge 4b. The wedge angle β is reduced because the rake face 10 is included in a flute face of the helical flute 6 that is convexly curved, and the rake angle of the secondary cutting edge 4b is made larger than that of the existing drill illustrated in Fig. 8.

If the helix angle θ of the helical flute 6 (see Fig. 2) is too small, it is difficult to increase the rake angle of the cutting edge. If the helix angle θ is too large, the tip strength is decreased, while the true rake angle is increased and the cutting ability of the cutting edge is improved. Therefore, it is preferable that the helix angle θ be in the range of about 10° to 40°.

When drilling a fiber-reinforced composite material, the smaller the point angle α2 of the secondary cutting edge 4b, the smaller the degree of fuzzing of reinforcing fibers. When this angle is equal to or smaller than 90°, drilling can be performed without affecting the quality of a drilled hole. On the other hand, if this angle is too small, the outer end of the cutting edge wears rapidly. Therefore, it is preferable that the point angle α2 be equal to or larger than 20° and equal to or smaller than 90°.

When the diameter d of the outer end portion of the primary cutting edge 4a is equal to or larger than 70% of the drill diameter D, the drilling quality is improved owing to the secondary cutting edge 4b while preventing the cutting edge from becoming unnecessarily long.

### - EXAMPLE 1 -

The influence of the skew angle γ of the secondary cutting edge with respect to the rotation axis on the drilling quality of the double-angle drill was examined. The specifications of the drill used in this test were as follows: the drill diameter D = φ10 mm, the point angle of primary cutting edge was 120°, the point angle of secondary cutting edge was 60°, the diameter of outer end portion of primary cutting edge d = 0.9D, and the skew angle γ of the secondary cutting edge was varied as illustrated in Table I.

A CFRP plate having a thickness of 3 mm was used as a workpiece. The cutting conditions were such that the cutting speed Vc = 100 m/min and the feed f = 0.05 mm/rev. Table I lists the result of the experiment.

In the row for chatter in Table I, "+" represents "chatter did not occur", "±" represents "slight chatter occurred", and "-" represents "chatter occurred". In the row for fuzzing, "+" represents "fuzzing did not occur and the quality of the inner surface of a drilled hole was excellent", "±" represents "slight fuzzing occurred and the quality of the inner surface of a drilled hole was fair", and "-" represents "fuzzing occurred and the quality of the inner surface of a drilled hole was poor".

**[Table I]**

| | Skew angle γ of secondary cutting edge with respect to rotation angle | | | | | | |
|---|---|---|---|---|---|---|---|
| | 0° (with flat rake face) | -10° | -5° | 0° (without flat rake face) | 5° | 10° | 20° |
| Chatter | + | ± | + | + | + | - | - |
| Fuzzing | - | ± | + | + | + | ± | ± |

In the test, chatter occurred during drilling when the skew angle γ of the secondary cutting edge was equal to or larger than 10°. When the skew angle γ was in the range of-5° to +5°, drilling was stably performed without causing chatter. When the skew angle γ was -10°, slight chatter and slight fuzzing were observed.

### - EXAMPLE 2 -

Next, the influence of a difference in the point angle α2 of the secondary cutting edge of the double-angle drill on the quality of drilling and the tip wear was examined. The specifications of the drill used in this test were as follows: the drill diameter D = φ6 mm, the point angle of primary cutting edge α1 = 140°, and the diameter of the drill at the outer end of primary cutting edge d = 0.83D.

A CFRP plate having a thickness of 10 mm was used as a workpiece. The cutting conditions were such that the cutting speed Vc = 100 m/min and the feed f = 0.05 mm/rev. Table II lists the result of the experiment.

In the row for fuzzing in Table II, "+" represents "fuzzing did not occur and the quality of the inner surface of a drilled hole was excellent" and "-" represents "fuzzing occurred and the quality of the inner surface of a drilled hole was poor". The tip wear was evaluated after drilling 500 holes. The tip wear amount in the cells of evaluation represents the maximum flank face wear amount (mm).

**[Table II]**

| | Wedge angle α2 of secondary cutting edge | | | | | |
|---|---|---|---|---|---|---|
| | 5° | 10° | 30° | 60° | 90° | 120° |
| Fuzzing | + | + | + | + | + | - |
| Tip wear | 0.062 | 0.045 | 0.038 | 0.035 | 0.033 | 0.037 |

When the point angle α2 of the secondary cutting edge was equal to or smaller than 90°, fuzzing was prevented. According to the experiment, the amount of tip wear was small when the point angle α2 was 10°. However, the appropriate value of lower limit of the point angle α2 is considered to be 20°.

In increasing the life of a drill that is used for drilling a workpiece made of CFRP or the like that accelerates tip wear, forming a hard coating such as a diamond coating on the surface of the cutting edge or forming the cutting edge by a hard compact is effective. Reference Signs List

1 drill
2 body
3 shank
4 cutting edge
4a primary cutting edge
4b secondary cutting edge
5 web thinning
6 helical flute
7 first flank face
8 second flank face
9 leading edge
10, 10₋₁ rake face
11 margin face
O rotation axis
E1 inner end of secondary cutting edge
E2 outer end of secondary cutting edge
γ skew angle of secondary cutting edge with respect to rotation axis in a side view of the drill
α1 point angle of primary cutting edge
α2 point angle of secondary cutting edge
β wedge angle
θ helix angle of helical flute
Δθ twist amount of helical flute from inner end to outer end of secondary cutting edge
H core height
W core thickness

## Claims

1. A double-angle twist drill including a cutting edge including a primary cutting edge (4a) that extends partway from a rotation center outward in a radial direction and a secondary cutting edge (4b) that extends from the outer end of the primary cutting edge (4a) to a periphery of a body (2), the secondary cutting edge (4b) having a point angle (α2) that is different from a point angle (α1) of the primary cutting edge (4a), **characterised in that** a skew angle (γ) of the secondary cutting edge (4b) with respect to a rotation axis (O) in a side view of the drill is in the range of -5° to +5°, **in that** a rake face of the secondary cutting edge (4b) is formed as a curved surface that is the same as a helical flute (6) that forms the primary cutting edge (4a), and **in that** a part of a flute face of the helical flute (6) that extends along a leading edge (9) is convexly curved with respect to the normal direction of rotation of the drill and intersects a margin face (11) at the periphery of the body (2).

2. The twist drill according to Claim 1, wherein a helix angle (θ) of the helical flute (6) is in the range of 10° to 40°.

3. The twist drill according to Claim 1 or claim 2, wherein the point angle (α2) of the secondary cutting edge (4b) is smaller than the point angle (α1) of the primary cutting edge (4a), and the point angle (α2) is in the range of 90° to 20°.

4. The twist drill according to any one of Claims 1 to 3, wherein a diameter (d) of an outer end portion of the primary cutting edge (4a) is equal to or larger than 70% of a drill diameter (D).

5. The twist drill according to any one of Claims 1 to 4, wherein the flute face of the helical flute (6) intersects the margin face (11) at the periphery of the body (2) with an acute angle.

## Patentansprüche

1. Doppelwinkel-Spiralbohrer, umfassend eine Schneidkante mit einer Hauptschneidkante (4a), die sich in radialer Richtung von einem Rotationsmittelpunkt nach außen erstreckt, und einer Nebenschneidkante (4b), die sich von dem äußeren Ende der Hauptschneidkante (4a) zu einem Umfang eines Körpers (2) erstreckt, wobei die Nebenschneidkante (4b) einen Spitzenwinkel (α2) hat, der sich von einem Spitzenwinkel (α1) der Hauptschneidkante (4a) unterscheidet,
**dadurch gekennzeichnet, dass**
ein Schrägungswinkel (γ) der Nebenschneidkante (4b) gegenüber einer Drehachse (O) in einer Seitenansicht des Bohrers im Bereich von -5° bis +5° liegt,
eine Spanfläche der Nebenschneidkante (4b) als eine gekrümmte Oberfläche ausgebildet ist, die dieselbe wie eine spiralförmige Auskehlung (6) ist, die die primäre Schneidkante (4a) bildet, und
ein Teil einer Auskehlungsfläche der spiralförmigen Auskehlung (6), die sich entlang einer Vorderkante (9) erstreckt, in Bezug auf die normale Drehrichtung des Bohrers konvex gekrümmt ist und eine Randfläche (11) an dem Umfang des Körpers (2) schneidet.

2. Spiralbohrer nach Anspruch 1, bei dem ein Steigungswinkel (θ) der spiralförmigen Auskehlung (6) im Bereich von 10° bis 40° liegt.

3. Spiralbohrer nach Anspruch 1 oder Anspruch 2, bei dem der Spitzenwinkel (α2) der Nebenschneidkante (4b) kleiner ist als der Spitzenwinkel (α1) der Hauptschneidkante (4a) und der Spitzenwinkel (α2) im Bereich zwischen 90° und 20° liegt.

4. Spiralbohrer nach einem der Ansprüche 1 bis 3, bei dem ein Durchmesser (d) eines äußeren Endabschnitts der Hauptschneidkante (4a) größer oder gleich 70% eines Bohrerdurchmessers (D) ist.

5. Spiralbohrer nach einem der Ansprüche 1 bis 4, bei dem die Auskehlungsfläche der spiralförmigen Auskehlung (6) die Randfläche (11) an dem Umfang des Körpers (2) mit einem spitzen Winkel schneidet.

## Revendications

1. Foret hélicoïdal à angle double comprenant un bord coupant comprenant un premier bord coupant (4a) qui s'étend en partie à partir d'un centre de rotation vers l'extérieur dans une direction radiale et un second bord coupant (4b) qui s'étend à partir de l'extrémité extérieure du premier bord coupant (4a) vers une périphérie d'un corps (2), le second bord coupant (4b) ayant un angle de pointe (α2) qui est différent d'un angle de pointe (α1) du premier bord coupant (4a),
**caractérisé en ce que**
un angle d'inclinaison (γ) du second bord coupant (4b), par rapport à un axe de rotation (O) dans une vue latérale du foret, se trouve dans l'intervalle de -5° à +5°,
**en ce que**
une face de coupe du second bord coupant (4b) est formée comme une surface courbée qui est identique à une cannelure hélicoïdale (6) qui forme le premier bord coupant (4a), et
**en ce qu'**une partie d'une face de cannelure de la cannelure hélicoïdale (6) qui s'étend le long d'un bord d'attaque (9) est courbée de manière convexe par rapport à la direction normale de rotation du foret et croise une face de marge (11) à la périphérie du corps (2).

2. Foret hélicoïdal selon la revendication 1, dans lequel un angle d'hélice (θ) de la cannelure hélicoïdale (6) se trouve dans l'intervalle de 10° à 40°.

3. Foret hélicoïdal selon la revendication 1 ou la revendication 2, dans lequel l'angle de pointe (α2) du second bord coupant (4b) est plus petit que l'angle de pointe (α1) du premier bord coupant (4a), et l'angle de pointe (α2) se trouve dans l'intervalle de 90° à 20°.

4. Foret hélicoïdal selon l'une quelconque des revendications 1 à 3, dans lequel un diamètre (d) d'une portion d'extrémité externe du premier bord coupant (4a) est supérieur ou égal à 70 % d'un diamètre de foret (D).

5. Foret hélicoïdal selon l'une quelconque des revendications 1 à 4, dans lequel la face de cannelure de la cannelure hélicoïdale (6) croise la face de marge (11) à la périphérie du corps (2) avec un angle aigu.
